# EUROPÄISCHE PATENTANMELDUNG

(11) **EP 2 362 158 A1**
(43) Veröffentlichungstag der Anmeldung: **31.08.2011**
(21) Anmeldenummer: 10154106.8
(22) Anmeldetag: 19.02.2010
(51) Int. Cl.: F24J 2/26

(54) **Sonnenkollektor**

(71) Anmelder: Ernst Schweizer AG, Metallbau, 8908 Hedigen (CH)
(72) Erfinder: Weiss, Hanspeter, 5622 Waltenschwil (CH); Schläpfer, Bruno, 8903 Birmensdorf (CH); Spiri, Thomas, 8049 Zürich (CH)
(74) Vertreter: Liebetanz, Michael

(57) **Zusammenfassung**

Es wird ein Sonnenkollektor mit einem einen Innenraum (6) begrenzenden Aussenrahmen (5) und einer im Innenraum (6) angeordneten Absorbereinheit angegeben. Die Absorbereinheit umfasst mindestens eine Absorberleitung (2), ein mit der Absorberleitung (2) in Verbindung stehendes Absorberblech (1), und Sammelleitungen (3, 12), die mit der Absorberleitung (2) in Verbindung stehen. Mindestens ein sich entlang einer Längsachse erstreckendes Versteifungselement (4) ist angeordnet, in welches Teile der Absorberleitungen (2) einragen und/oder hindurchragen, wobei das Versteifungselement (4) im Aussenrahmen (6) positionierbar ist.

## Beschreibung

### TECHNISCHES GEBIET

Die vorliegende Erfindung betrifft einen Sonnenkollektor nach dem Oberbegriff des Anspruchs 1 und ein Verfahren zur Herstellung eines Sonnenkollektors nach Anspruch 15.

### STAND DER TECHNIK

Aus dem Stand der Technik sind Sonnenkollektoren zur Nutzung der Sonnenenergie bekannt. Typischerweise umfassen die Sonnenkollektoren einen Aussenrahmen, welcher einen Innenraum zur Aufnahme eines Absorberbleches und der dazugehörigen Absorberleitungen bereitstellt. Der Innenraum wird nach hinten durch eine Abdeckung und nach vorne mit einer Glasscheibe begrenzt. Die Absorberleitungen werden dabei durch ein Wärmeträgermedium durchströmt, welches sich während der Durchströmung durch die Sonneneinstrahlung erwärmt.

Bezüglich des mechanischen Aufbaus von Sonnenkollektoren sind unterschiedliche technische Lösungen bekannt. Beispielsweise sei hier diejenige der DE 42 41 687 genannt.

Aus den aus dem Stand der Technik bekannten Sonnenkollektoren ergeht der Nachteil, dass die Montage der Absorbereinheit, bestehend aus Absorberleitung und Absorberblech, im Aussenrahmen des Sonnenkollektors sehr aufwändig ist, da die Absorbereinheit nur eine sehr geringe Stabilität aufweist. Dies kann während der Montage und im Betrieb zu Beschädigungen an der Absorbereinheit führen. Insbesondere die ersteren werden meist im Betrieb erkennbar.

Weiter ergeht aus den aus dem Stand der Technik bekannten Sonnenkollektoren der Nachteil, dass die Befestigung des Absorberbleches mit den Absorberleitungen, sowie den Sammelleitungen, im Innenraum des Rahmens nur unbefriedigend gelöst ist.

### DARSTELLUNG DER ERFINDUNG

Ausgehend vom Stand der Technik liegt der vorliegenden Erfindung eine Aufgabe zugrunde, einen Sonnenkollektor anzugeben, welcher die Nachteile des Standes der Technik überwindet. Insbesondere soll der Sonnenkollektor eine Absorbereinheit aufweisen, welche einerseits besser montierbar ist und andererseits formstabil im Sonnenkollektor gelagert werden kann.

Diese Aufgabe wird durch die Merkmale des Anspruchs 1 gelöst. Demgemäss wird ein Sonnenkollektor mit einem einen Innenraum begrenzenden Aussenrahmen und einer im Innenraum angeordneten Absorbereinheit angegeben. Die Absorbereinheit umfasst mindestens eine Absorberleitung, ein mit der Absorberleitung in Verbindung stehendes Absorberblech, und Sammelleitungen, die mit der Absorberleitung in Verbindung stehen. Mindestens ein sich entlang einer Längsachse erstreckendes Versteifungselement ist angeordnet, in welches Teile der Absorbereinheit einragen und/oder hindurchragen. Die Absorbereinheit kann also zusammen mit dem Versteifungselement im Aussenrahmen positioniert bzw. eingelegt werden.

Das Versteifungselement sorgt für eine Versteifung der Absorbereinheit als ganzes, weshalb diese dann besser in den Aussenrahmen einlegbar wird, also besser montierbar ist. Durch die Versteifung werden unerwünschte Bewegungen und Verformungen der Absorbereinheit bei der Montage und im Betrieb vermieden und somit können Folgeschäden ebenfalls vermieden werden. Weiter sorgt das Versteifungselement für eine formstabile Absorbereinheit.

Vorzugsweise ragt die Sammelleitung durch das Versteifungselement hindurch. Durch das Hindurchführen der Sammelleitungen wird die Stabilität der Absorbereinheit durch das Versteifungselement weiter erhöht.

Das Versteifungselement ist vorzugweise ein sich entlang einer Längsachse erstreckendes Profil. Durch die Verwendung eines Profils kann eine besonders einfach herstellbare Struktur geschaffen werden. Ferner erhöht das Profil die Steifigkeit der Absorbereinheit. Vorzugsweise hat das Profil die Gestalt eines U-Profils, eines L-Profils oder eines T-Profils. Vorzugsweise stellen die Profile einen Aufnahmeraum bereit, in welchen Teile der Absorbereinheit teilweise einragen können. Beim U-Profil wird der Aufnahmeraum, in welchen die Absorbereinheit teilweise einragt, beispielsweise durch den Steg und die beiden vom Stegende abstehenden Schenkel gebildet. Beim L-Profil wird der Aufnahmeraum durch den Steg und den vom Steg abstehenden Schenkel bereitgestellt. Alternativ kann auch ein Flachprofil eingesetzt werden, welches vorzugsweise über Durchbrüche verfügt, in welche die Absorberleitungen einragen können.

Vorzugsweise sind die Versteifungselemente an zwei sich gegenüberliegenden Kanten des Absorberbleches angeordnet, was die Steifigkeit der Absorbereinheit weiter erhöht.

Nach einer bevorzugten Ausführungsform ist in dem Bereich, in welchem das Versteifungselement zu liegen kommt, zwischen den Absorberleitungen und dem Absorberblech ein Zwischenraum vorgesehen, in welchen Teile des Versteifungselementes einragen können. Folglich erstrecken sich Teile des Versteifungselementes zwischen Absorberleitung und Absorberblech.

Vorzugsweise sind die Absorberleitungen mäanderförmig oder schlangenförmig angeordnet, wobei jeweils der Umkehrabschnitt der in das Versteifungselement einragende und/oder hindurchragende Teil ist, wobei der Zwischenraum zwischen Absorberleitung und Absorberblech im Bereich des Umkehrabschnittes angeordnet ist.

Nach einer weiteren bevorzugten Ausführungsform ragen Teile des Absorberbleches und der Absorberleitung in das Versteifungselement ein, wobei das Absorberblech und Absorberleitung über mindestens ein Klemmelement mit dem Versteifungselement verbunden werden. Alternativ können auch eine Vielzahl von Klemmelementen angeordnet werden. Diese Ausführungsformen erlauben eine besonders einfache und zeitsparende Montage.

Bevorzugt sind die Absorberleitungen mäanderförmig oder schlangenförmig angeordnet, wobei das Klemmelement im Bereich der Umkehrabschnitte angeordnet ist. Das Klemmelement ist vorzugsweise kraftschlüssig oder formschlüssig mit dem Versteifungselement verbunden.

Vorzugsweise sind die Sammelleitungen derart angeordnet, dass sich diese aus dem Innenraum durch den Aussenrahmen nach aussen erstrecken, so dass die Sammelleitungen freie Enden bereitstellen, wobei der Sonnenkollektor über diese freien Enden gelagert wird. Die Art der Lagerung ist besonders einfach und kann mit allen Ausführungsformen kombiniert werden.

Die Sammelleitungen ragen vorzugsweise durch den Aussenrahmen hindurch und stehen derart mit dem Aussenrahmen in Verbindung, dass die Absorbereinheit über die Sammelleitungen im Aussenrahmen gelagert wird, wobei sich die Sammelleitungen an zwei sich gegenüberliegenden Seiten des Aussenrahmens nach aussen erstrecken.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Ansicht eines Sonnenkollektors mit einer Absorbereinheit, welche durch Versteifungselemente im Aussenrahmen positioniert ist, von oben;
- Fig. 2: eine perspektivische Ansicht eines Absorberbleches mit Absorberleitung und Versteifungselementen nach einer ersten Ausführungsform;
- Fig. 3: eine Ansicht der Figur 2 von unten;
- Fig. 4: eine Detailansicht der Figur 2 von der Seite;
- Fig. 5: eine Ansicht des Details V der Figur 2 von unten;
- Fig. 6: eine perspektivische Ansicht eines Absorberbleches mit Absorberleitung und einem Versteifungselement nach einer zweiten Ausführungsform;
- Fig. 7: eine Ansicht des Details VII von Figur 6 von unten;
- Fig. 8: eine Detailansicht von Figur 6 von der Seite;
- Fig. 9: eine Ansicht des Details IV der Durchführung einer Sammelleitung durch den Aussenrahmen von Figur 1;
- Fig. 10: eine Ansicht eines Absorberbleches mit Absorberleitung und Versteifungselementen nach einer dritten Ausführungsform;
- Fig. 11: eine Detailansicht der Figur 10;
- Fig. 12: ein Befestigungselement nach Figur 10 von vorne;

- Fig. 13: das Befestigungselement der Figur 12 von hinten; und
- Fig. 14: eine Detailansicht der Figur 10 von der Seite.

### BESCHREIBUNG BEVORZUGTER AUSFÜHRUNGSFORMEN

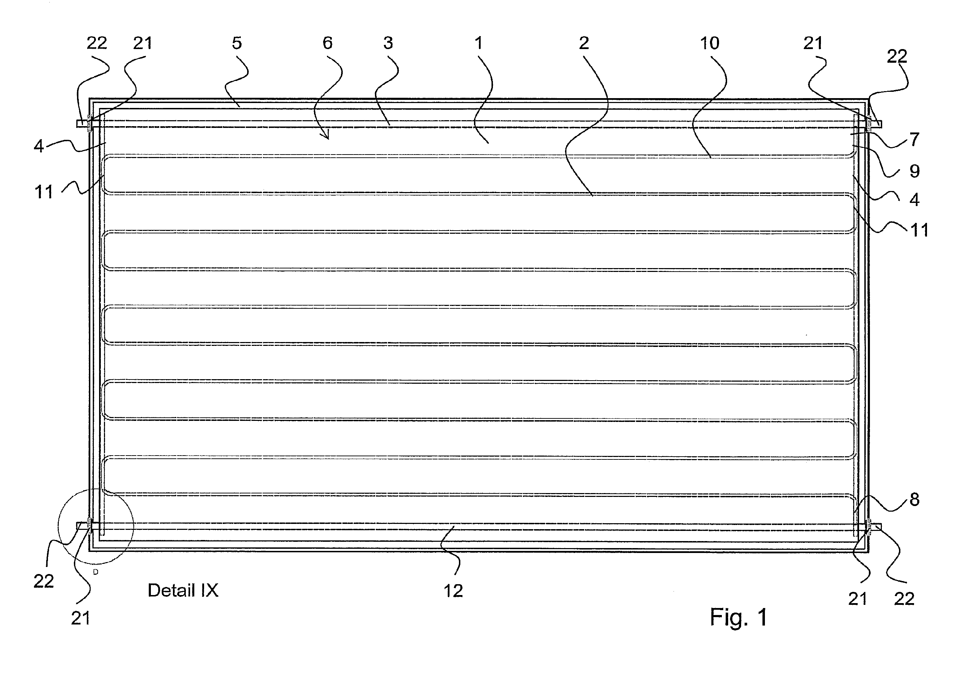

Die Figur 1 zeigt einen Sonnenkollektor von oben. Der Sonnenkollektor umfasst im wesentlichen einen Aussenrahmen 5, welcher einen Innenraum 6 begrenzt, und eine im Innenraum 6 angeordnete Absorbereinrichtung oder Absorbereinheit, die mit Versteifungselementen 4, hier zwei an der Zahl, in Verbindung steht, wobei die Versteifungselemente 4 im Innenraum 6 zusammen mit der Absorbereinheit positionierbar sind.

Die Absorbereinheit umfasst hier ein Absorberblech 1,eine Absorberleitung 2, eine erste Sammelleitung 3 und eine zweite Sammelleitung 12, welche beide mit der Absorberleitung 2 in Verbindung stehen. Die Absorberleitung 2 ist mäanderförmig oder schlangenlinienförmig angeordnet und erstreckt sich von einem Eintrittsabschnitt 7 mit einer Eintrittsöffnung zu einem Austrittsabschnitt 8 mit einer Austrittsöffnung. Vom Eintrittsabschnitt 7 her gesehen wird die Absorberleitung nach einem Anfangsabschnitt 9 erstmals umgelenkt und erstreckt sich dann über einen gerade verlaufenden Abschnitt 10 bis zu einem Umkehrabschnitt 11. Beim Umkehrabschnitt 11 wird der Verlauf der Absorberleitung 2 im wesentlichen um 180° umgelenkt, wobei die Absorberleitung dann parallel zum gerade verlaufenden Abschnitt 10 bis hin zu einem weiteren Umkehrabschnitt 11 verläuft. Dieser Verlauf wiederholt sich einige Male. Den Abschluss der Absorberleitung 2 bildet dann der Austrittsabschnitt 8. Der Umkehrabschnitt 11 wird im wesentlichen durch zwei um 90° gebogene Rohrstücke und einen dazwischenliegenden geraden Abschnitt gebildet. In der vorliegenden Ausführungsform münden der Eintrittsabschnitt 7 und der Austrittsabschnitt 8 bezüglich des Aussenrahmens 2 auf der gleichen Seite in die entsprechenden Sammelleitungen 3, 12. Alternativ ist es auch denkbar, dass der Eintrittsabschnitt 7 auf der einen Seite in die Sammelleitung 3 mündet, während der Austrittsabschnitt 8 auf der anderen, der einen Seite gegenüberliegenden Seite, in die Sammelleitung 12 mündet.

Die Absorberleitung 2 wird durch ein Wärmeträgermedium durchströmt, welches sich während der Durchströmung vom Eintrittsabschnitt 7 bis zum Austrittsabschnitt 8 durch die Sonneneinstrahlung erwärmt.

Der Eintrittsabschnitt 7 und auch der Austrittsabschnitt 8 stehen mit jeweils einer Sammelleitung 3, 12 in Verbindung. Die Sammelleitung 3 steht hier mit dem Eintrittsabschnitt 7 in Verbindung und führt das zu erwärmende Wärmeträgermedium der Absorberleitung 2 zu. Die Sammelleitung 12 steht mit dem Austrittsabschnitt 8 in Verbindung und führt das erwärmte Wärmeträgermedium aus der Absorberleitung 2 ab. Die Sammelleitungen 3, 12 können beispielsweise mit Sammelleitungen von benachbart angeordneten Sonnenkollektoren verbunden sein, oder aber mit einer Leitung, welche vom bzw. zum Verbraucher führt.

Die mäanderförmige Absorberleitung 2 steht mit der Rückseite des Absorberblechs 1 in Verbindung. Vorzugsweise ist die Absorberleitung 2 mit dem Absorberblech 1 stoffschlüssig verbunden, wie beispielsweise verschweisst oder verlötet. Alternativ kann auch eine formschlüssige und/oder kraftschlüssige Verbindung vorgesehen sein, wobei hier auf der entsprechenden Seite des Absorberbleches 1 beispielsweise Halteelemente vorgesehen sein können. Im Bereich der Umkehrabschnitte 11 besteht vorzugsweise keine Verbindung zwischen der Absorberleitung 2 und dem Absorberblech 1, das heisst, das Absorberblech 1 kann bezüglich der Absorberleitung 2 angehoben werden, so dass zwischen den Umkehrabschnitten 11 und der Absorberleitung 2 ein Zwischenraum 17 geschaffen werden kann.

Die Vorderseite des Absorberblechs 3 ist gegen die Einstrahlungsseite gerichtet. Das heisst, dass die Sonnenenergie auf diese Seite einwirkt.

In Richtung der Einstrahlungsseite wird der Innenraum 6 durch eine nicht gezeigte Glasscheibe begrenzt, wobei die Glasscheibe in Verbindung mit dem Aussenrahmen 5 steht. Auf der der Einstrahlungsseite entgegengesetzt liegenden hinteren Seite, wird der Innenraum 6 durch eine nicht gezeigte Rückwand begrenzt. Ferner kann zwischen der Absorbereinheit und der Rückwand eine Isolierschicht angeordnet sein.

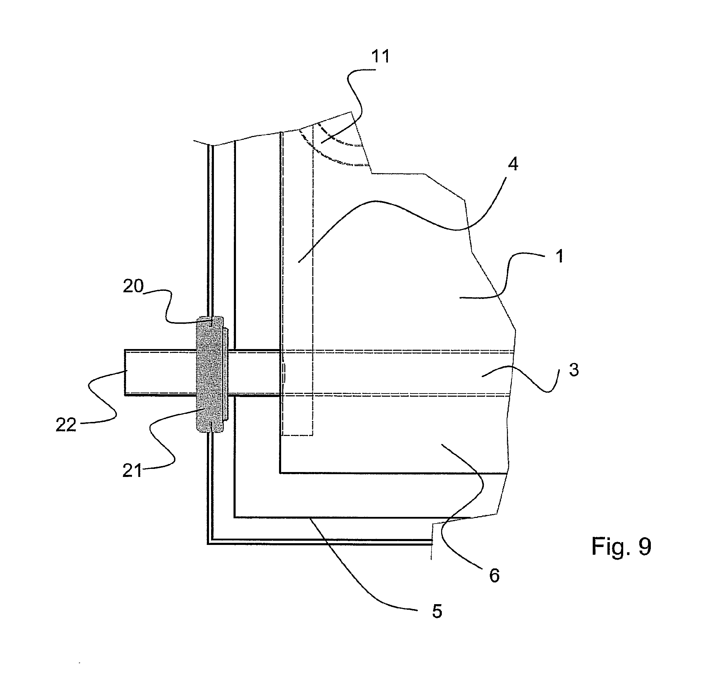

Der Aussenrahmen weist hier vier Öffnungen 20 auf, durch welche die Sammelleitungen 3, 12 nach aussen geführt werden. Die Sammelleitungen 3, 12 stehen über die Öffnungen 20 in Kontakt mit dem Aussenrahmen 51, wobei die Absorbereinheit 1, 2 über die Sammelleitungen 3, 12 im Innenraum 6 gelagert werden. Weitere Details werden mit Hilfe der Figur 9 erläutert. In der vorliegenden Ausführungsform stehen die Absorberleitungen mittelbar mit dem Aussenrahmen über die Lagerelemente oder Durchführtüllen 21 in Kontakt.

Die Versteifungselemente 4 werden an zwei sich gegenüberliegenden Kanten des Absorberbleches 1 im Bereich der Umkehrabschnitte 11 der Absorberleitung 2 angeordnet. Dabei dienen die Versteifungselement 4 im wesentlichen der Versteifung der Absorbereinheit. Die Versteifung hat den Vorteil, dass während der Montage die Absorbereinheit nicht beschädigt wird, und dass im Betrieb keine Deformation des Absorbers auftreten kann.

Weiter ist es denkbar nur ein oder mehr als zwei Versteifungselemente 4 anzuordnen.

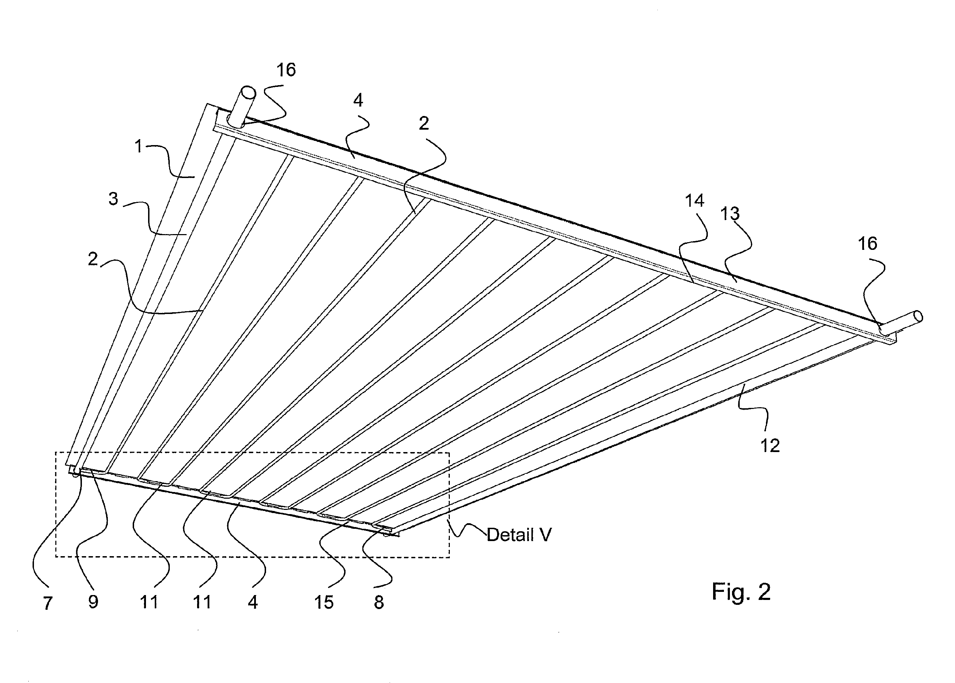

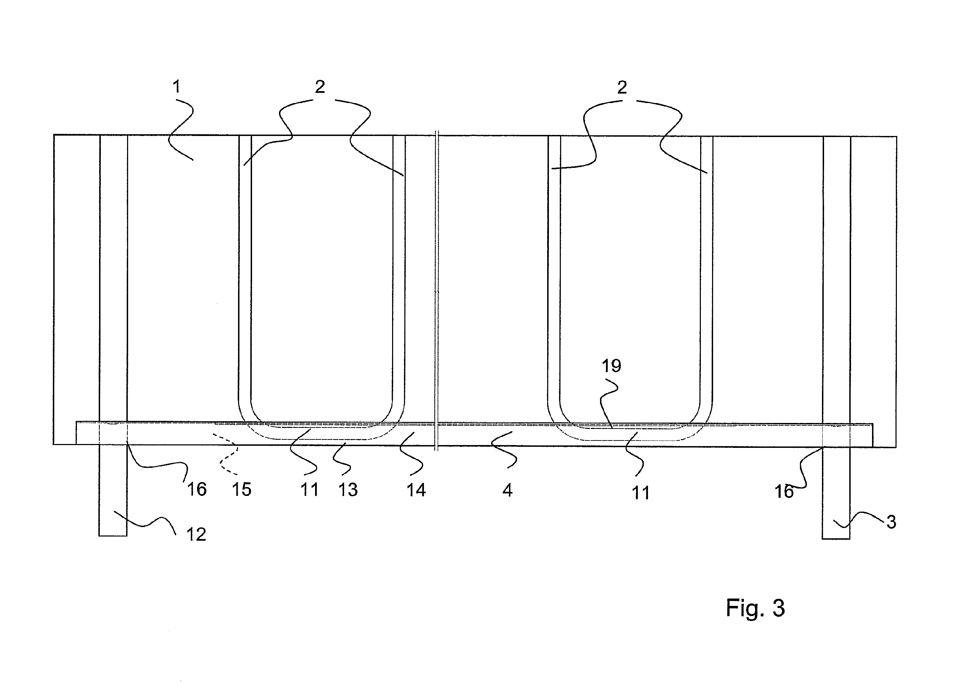

Mit den Figuren 2 bis 5 wird eine erste Ausführungsform des Versteifungselementes 4 gezeigt. Das Versteifungselement 4 hat in dieser Ausführungsform die Gestalt eines entlang einer Längsachse verlaufenden Profils. Das Profil kann dabei unterschiedlich ausgebildet sein. In der vorliegenden Ausführungsform wurde ein U-Profil gewählt, wobei sich von einen Hauptsteg 13 oben und unten je ein Profilabschnitt 14 senkrecht vom Hauptsteg 13 erstrecken, so dass ein Zwischenraum 15 entsteht. Andere Profilarten sind ebenfalls denkbar, wobei besonders vorteilhaft mindestens ein Hauptsteg 13 vorhanden ist, von welchem mindestens ein Profilabschnitt absteht, welcher in den unten beschrieben Zwischenraum zwischen Absorberblech 3 und Absorberleitung 2 einragt. Beispielsweise sind L-Profile, T-Profile oder Doppel-T-Profile denkbar.

Das Versteifungselement 4 ist derart zum Absorberblech 3 ausgerichtet, dass der Hauptsteg 13 im wesentlichen senkrecht zum Absorberblech 3 steht und dass der Profilabschnitt 14 im wesentlichen parallel zum Absorberblech 3 steht.

In der vorliegenden Ausführungsform ragen Teile, hier die Umkehrabschnitte 11, der Absorberleitung 2 in den Zwischenraum 15 des Versteifungselementes 4 ein. Ferner ragen die Sammelleitungen 3, 12 durch im Hauptsteg 13 angeordnete Öffnungen 16 durch das Versteifungselement 4 hindurch.

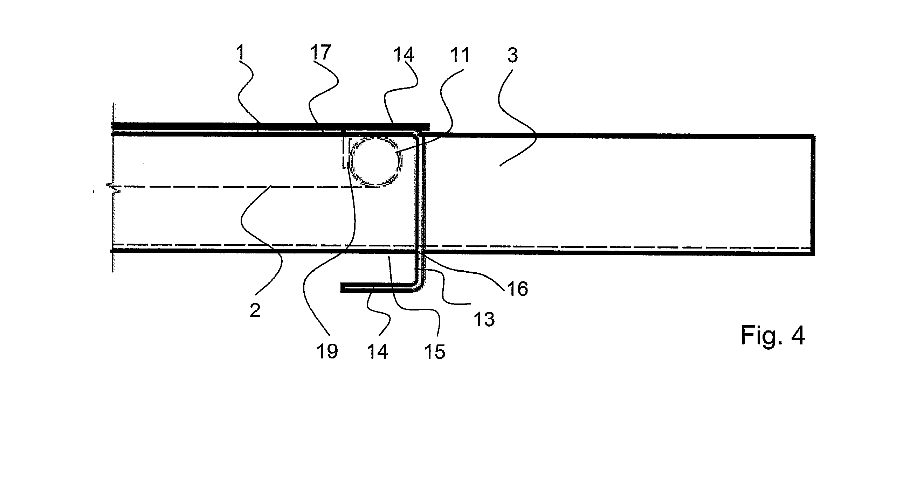

Der obere Profilabschnitt 14 ragt in den Zwischenraum 17 zwischen dem Absorberblech 1 und der Absorberleitung 2, hier der Umkehrabschnitte 11, ein. Mit anderen Worten kann auch gesagt werden, dass der obere Profilabschnitt 14 durch das Absorberblech 1 und die Umkehrabschnitte 11 geklemmt wird. Dies ist insbesondere in der Figur 4 gut erkennbar. Aufgrund des Einschiebens des Profilabschnittes 14 in den Zwischenraum verläuft das Absorberblech 3 nicht vollständig in einer Ebene, da es sich im Bereich des Versteifungselementes 4 etwas nach oben hin abhebt.

Bevorzugterweise werden in dieser ersten Ausführungsform das Absorberblech 3 und die Absorberleitung 2 jeweils aus dem gleichen Material gefertigt oder es werden Materialien mit im wesentlichen ähnlichen oder gleichen Ausdehungskoeffizienten gewählt.

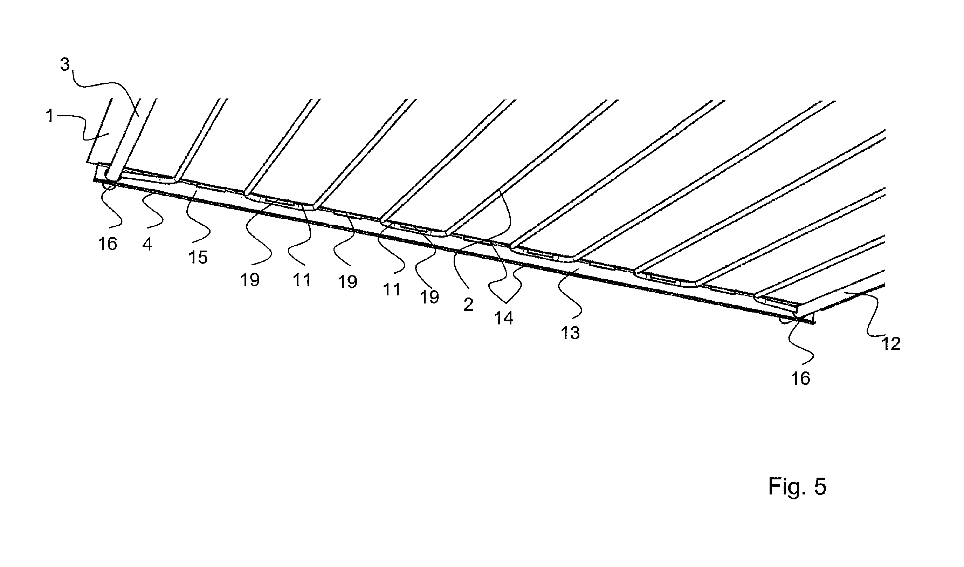

Ferner kann das Versteifungselement 4 beabstandet zueinander angeordnete Haltestege 19 aufweisen, welche an dem Profilabschnitt 14 angeformt sind, der mit der Absorberleitung 2 in Verbindung steht. Die Haltestege 19 lassen sich beispielsweise in der Figur 5 gut erkennen. Dort kann erkannt werden, dass pro Umkehrabschnitt 11 je eine Haltesteg 19 angeordnet wurde. Die Haltestege 19 stehen dabei senkrecht vom Profilabschnitt 14 in Richtung Absorberleitung 2 und bilden einen Anschlag, an welchem der Umkehrabschnitt 11 anstehen kann. Der Haltesteg 19 kann dabei bereits in der gezeigten Stellung ausgeformt sein und der Umkehrabschnitt 11 kann eingehängt werden, oder der Haltesteg 19 wird nach dem Platzieren des Umkehrabschnittes 11 nach unten gebogen.

In der Figur 2 kann zudem erkannt werden, dass das Versteifungselement 4 eine Länge aufweist, welche etwas kürzer ist, als die entsprechende Kante des Absorberbleches 1. In einer alternativen Ausführungsform wäre es zudem denkbar, dass das Versteifungselement 4 eine Länge aufweist, welche länger ist als die Distanz zwischen den beiden Sammelleitungen 3, 12. Hierbei würde das Versteifungselement 4 auf beiden Seiten über das Absorberblech 1 hervorstehen, wobei die hervorstehenden Teile zur Befestigung dienen können.

Nachdem die Absorbereinheit mit dem Versteifungselement 4 zu einer Einheit in Verbindung gebracht wurde, wird die ganze Einheit in den Innenraum 6 eingesetzt. Anschliessend werden die beiden Seitenwände des Aussenrahmens 6 über die Sammelleitungen geschoben, so dass diese dann durch die jeweiligen Seitenwände nach aussen ragen. Alternativ kann auch der Aussenrahmen 5 vollständig montiert werden und die Absorbereinheit 1, 2 mit dem bzw. den Versteifungselemente(n) 4 versehen werden. Dann kann die Absorbereinheit 1, 2, 4 in den Innenraum 6 eingesetzt werden, wobei in einem ersten Schritt die Absorberleitungen 3, 12 an einer ersten Seite durch die Öffnungen 20 geführt werden und dann in einem zweiten Schritt durch die Öffnungen 20 der zweiten Seite, die der ersten Seite gegenüber liegt, geführt werden. Dabei steht die Absorbereinheit 1, 2, 4 zwischen den beiden Schritten schräg zur Richtung der Profile. Die alternative Montagevariante hat den Vorteil, dass der Aussenrahmen zuerst vollständig gefertigt werden kann, bevor die Absorbereinheit 1, 2, 4 eingesetzt wird.

Vorzugsweise werden die Versteifungselemente 4 nicht mit dem Aussenrahmen verbunden, sondern dienen im wesentlichen der Versteifung der Absorbereinheit. Es kann aber erforderlich sein, die Versteifungselemente lokal mit dem Aussenrahmen 5 zu verbinden, beispielsweise um das Eigengewicht des Absorberelemetes 5 auf den Aussenrahmen zu übertragen. Alternativ können die beiden Versteifungselemente 4 mit der dem Innenraum 6 zugewandten Seite des Aussenrahmens 5 verbunden werden. Beispielsweise ist es denkbar, dass die Befestigungselemente 4 mit dem Rahmen verschraubt, verschweisst oder vernietet werden.

Die Versteifungselemente 4 sind dabei derart angeordnet, dass die Profilabschnitte 14 vom Aussenrahmen 5 her gesehen in Richtung des Innenraumes 6 gerichtet sind. Mit anderen Worten heisst dies, dass der Zwischenraum 15 ebenfalls in Richtung des Innenraumes 6 zugänglich ist.

Abgesehen von der optionalen Verbindung zwischen Aussenrahmen 5 und Versteifungselementen 4 haben die hierin beschriebenen Versteifungselemente 4 die Wirkung als Versteifungselemente, welche der Absorbereinheit, insbesondere dem Absorberblech 1 und der Absorberleitung 2, zusätzliche Steifigkeit verleiht.

Wenn die Versteifungselemente 4 mit dem Aussenrahmen 5 in Kontakt stehen, wird die Wärmeleitung von der Absorbereinheit an den Aussenrahmen 5 durch die wenigen Berührungspunkte mit dem Versteifungselement 4 auf ein Minimum beschränkt. Weiter wäre es zudem denkbar, dass zwischen dem Versteifungselement 4 und Aussenrahmen 5 ein nicht gezeigtes Isolierelement angeordnet wird. Das Isolierelement kann beispielsweise auf der dem Aussenrahmen 5 zugewandten Oberfläche des Hauptsteges 13 angeordnet sein. Dabei ist es denkbar, dass sich das Isolierelement über die gesamte Oberfläche erstreckt oder nur über Teilbereiche derselben. Das Isolierelement würde den Abfluss von Wärme weiter minimieren. Wenn das Isolierelement aus einem mit geringem Kraftaufwand verformbarem Material ist, kann dieses auch Längenänderungen aufnehmen.

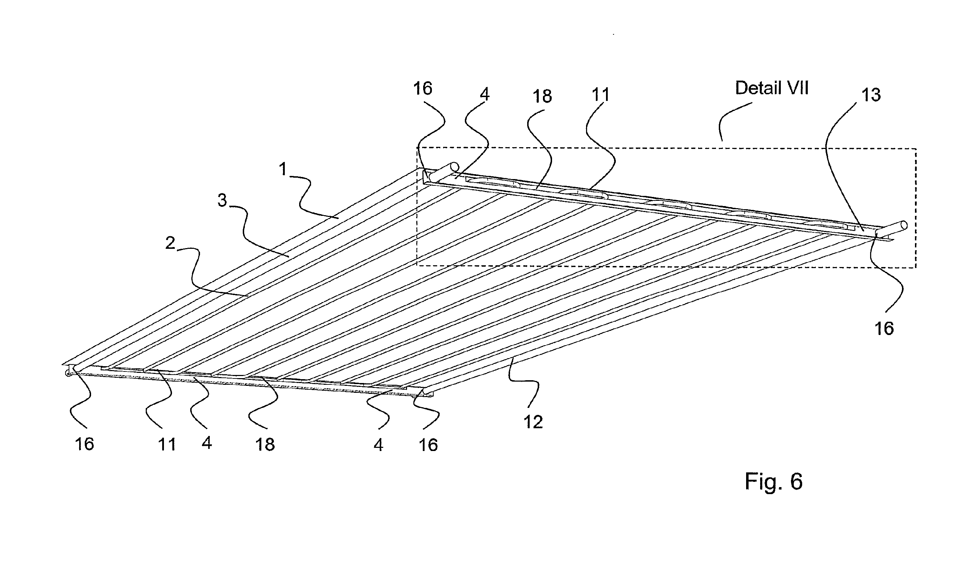

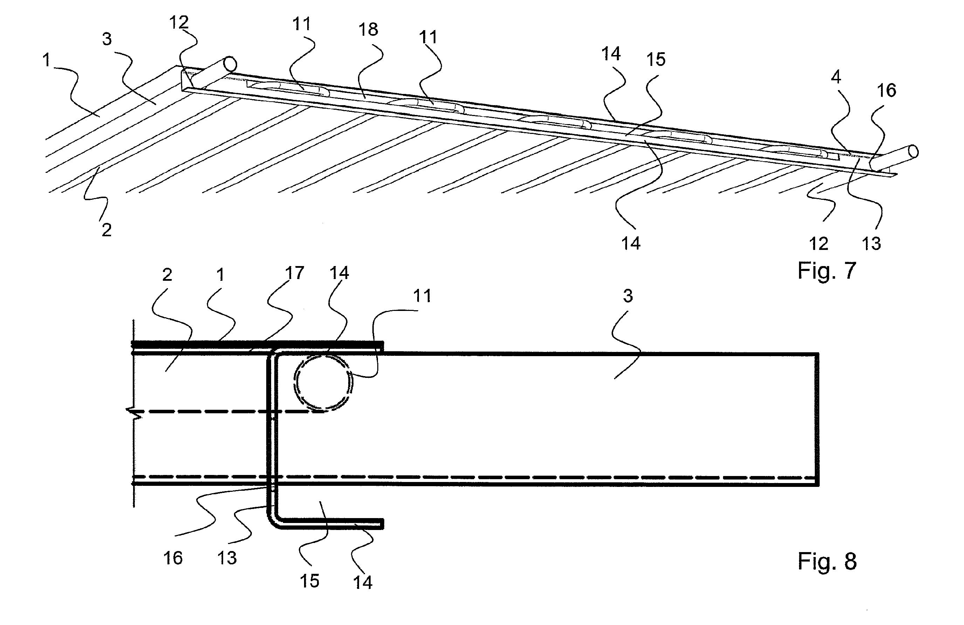

Die Figuren 6 bis 8 zeigen eine zweite Ausführungsform des Versteifungselementes 4. Gleiche Teile sind dabei mit gleichen Bezugszeichen versehen. Das Versteifungselement 4 hat hier ebenfalls die Struktur eines Profils. Das Profil weist in dieser Ausführungsform mindestens einen Durchbruch 18 auf, welcher sich durch den Hauptsteg 13 erstreckt. Die Absorberleitungen 2 können mit dem Umkehrabschnitt 11 durch den Durchbruch 18 hindurch ragen. Alternativ kann pro Umkehrabschnitt 13 je ein Durchbruch 18 angeordnet sein oder es kann für mehrere Umkehrabschnitte, beispielsweise für zwei, drei, vier, fünf oder sechs Umkehrabschnitte ein einziger Durchbruch 18 angeordnet sein. Demnach werden in der erst genannten Ausführungsform eine Vielzahl von Durchbrüchen im Hauptsteg 13 angeordnet.

Der Durchbruch 18 ist hier anschliessend an dem Profilabschnitt 14 angeordnet, so dass die Absorberleitungen 2 bzw. die Umkehrabschnitte 13 unterhalb des Profilabschnittes 14 durch den Durchbruch hindurch ragen und das Absorberblech 3 oberhalb des Profilabschnittes 14 zu liegen kommt. Mit anderen Worten kann auch gesagt werden, dass der Profilabschnitt 14 in den Zwischenraum 17 zwischen Umkehrabschnitt 13 und Absorberblech 1 einragt.

Die Orientierung des Profilabschnittes 14 kann in dieser Ausführungsform nach aussen gerichtet sein. Das heisst, dass der Profilabschnitt 14 gegen den Aussenrahmen 5 orientiert ist. Dies ist bezüglich der Wärmeleitung von der Absorbereinheit zum Aussenrahmen 5 besonders vorteilhaft, da die Kontaktfläche zwischen Aussenrahmen und Versteifungselement 4 weiter minimiert werden kann.

Das Versteifungselement 4 nach der zweiten Ausführungsform wird in analoger Art und Weise mit dem Rahmen in Verbindung gebracht.

Die Figur 9 zeigt eine Detailansicht der Hindurchführung der Sammelleitung 3, 12 durch den Aussenrahmen 5. Dabei kann die technische Lehre von Figur 9 mit allen hierin genannten Ausführungsfbrmen verwirklicht werden. Der Aussenrahmen 5 weist pro Sammelleitung 3, 12 eine Öffnung 20 auf. In der Öffnung 20 ist ein Dichtelement 21 angeordnet, durch welches die Sammelleitung 3, 12 hindurchgeführt werden kann. Vorzugsweise ist die Öffnung 20 etwas grösser ausgebildet als der Aussendurchmesser der Sammelleitung, so dass zwischen der Sammelleitung 3, 12 und der Öffnung 20 ein Lagerelement 21 angeordnet werden kann. Das Lagerelement 21 nimmt dabei die Sammelleitungen 3, 12 auf und lagert diese bezüglich des Aussenrahmens 5. Dabei wird über die Lagerung der Sammelleitungen 3, 12 die gesamte Absorbereinheit 1, 2 im Aussenrahmen 5 gehalten. Zusätzlich kann die Absorbereinheit 1, 2 auch noch auf einem im Innenraum 6 liegenden und in den Figuren nicht gezeigten Dichtelement aufgestützt sein.

Das Lagerelement 21 ist vorzugsweise aus einem flexiblen Material, so dass allfällige Längenänderungen aufgrund von Wärmeeinwirkung kompensierbar sind. Das Lagerelement 21 kann beispielsweise als Gummitülle ausgebildet sein. Abgesehen von der Funktion als Lagerungsstelle hat das Lagerelement 21 zusätzlich noch die Funktion eines Dichtelementes, wobei das Lagerelement 21 ein Eindringen von Feuchtigkeit in den Innenraum 6 verhindert.

Die Sammelleitung kann am freien Ende 22 entweder mit einem weiteren Sonnenkollektor oder mit einer Zuleitung bzw. Ableitung verbunden sein. In der Figur 1 kann weiter erkannt werden, dass die Sammelleitungen 3, 12 auf allen vier Seiten des Aussenrahmens 5 als freie Enden 22 hinausragen. Aufgrund der Anordnung der Dichtelemente 21 können die Sammelleitungen mit externen Lagerelementen der Unterkonstruktion einer Halterung für Solarkollektoren verbunden sein.

Das Versteifungselement 4 ist nach den hierin beschriebenen Ausführungsformen vorzugsweise einstückig ausgebildet und wird aus einem metallischen Werkstoff hergestellt. Als Werkstoff werden vorzugsweise Aluminium oder Stahl eingesetzt, wobei das Versteifungselement vorzugsweise noch oberflächenbehandelt wird, um die Lebensdauer zu erhöhen.

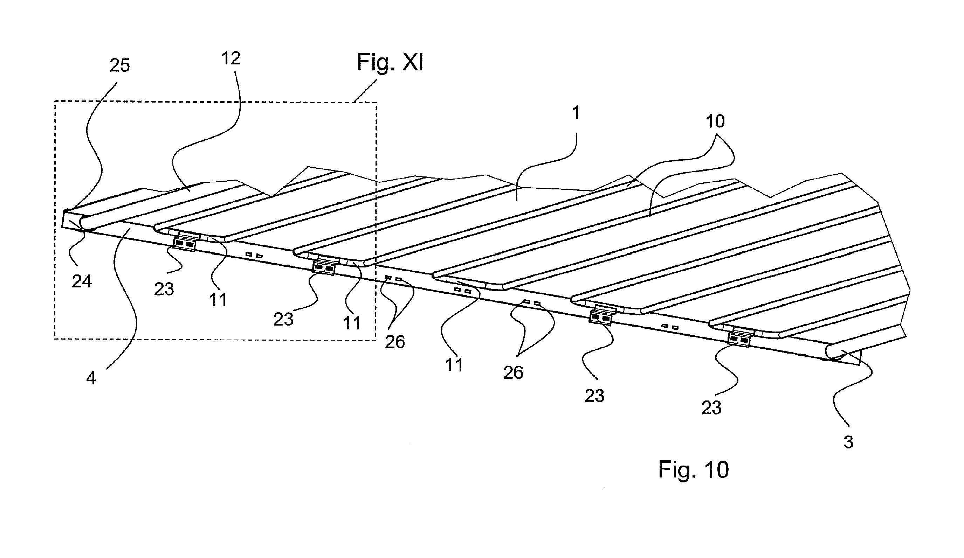

In den Figuren 10 bis 14 wird eine dritte Ausführungsform gemäss der vorliegenden Erfindung gezeigt. Gleiche Teile sind mit gleichen Bezugszeichen versehen. Das Versteifungselement 4 hat hier die Gestalt eines L-Profils und weist einen langen Profilschenkel 24 und einen kurzen Profilschenkel 25 auf. Die beiden Profilschenkel definieren dabei einen Aufnahmeraum, in welchen Teile der Absorbereinheit, also Teile des Absorberblechs 1 und Teile der Absorberleitung 2 einragen.

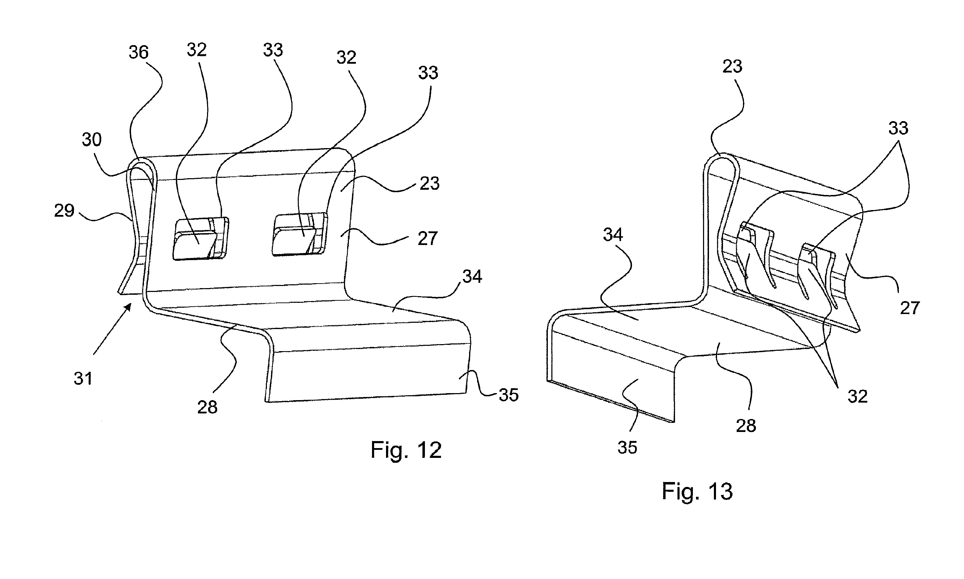

Das Versteifungselement 4 wird in dieser dritten Ausführungsform mit Befestigungselementen 23, welche auch als Befestigungsklips bezeichnet werden können, mit der Absorbereinheit verbunden. Die Befestigungselemente 23, welche im Zusammenhang mit der Figur 12 und 13 genauer erläutert werden, werden vorzugsweise für jeden Umkehrabschnitt 11 angeordnet. Alternativ können auch einzelne Umkehrabschnitte 11 nicht mit einem Befestigungselement 23 versehen sein.

Weiter umfasst das Versteifungselement 4 eine Vielzahl von in regelmässigen Abständen zueinander angeordneten Durchbrüchen 26. Die Durchbrüche 26 sind hier paarweise angeordnet und dienen der Aufnahme von Teilen des Befestigungselementes 25, wie dies untenstehend erläutert wird. Benachbarte Durchbrüche bzw. paarweise Anordnungen der Durchbrüche 26 sind beabstandet zueinander angeordnet, wobei der Abstand zwischen zwei Durchbrüchen bzw. zwei Durchbruchanordnungen dem Abstand zwischen zwei benachbarten Absorberleitungen entspricht.

Vorzugsweise wird an jedem Umkehrabschnitt 11 je ein Befestigungselement 25 angeordnet. Bei gewissen Ausführungsformen kann aber auch eine gute Stabilität erzielt werden, wenn die Befestigungselemente 25 an den Umkehrabschnitten 11 angeordnet sind, welche in den Randbereichen des Absorberbleches 1 liegen. Das heisst, dass die in der Mitte des Absorberbleches 1 liegenden Umkehrabschnitte 11 nicht mit Befestigungselementen versehen sind.

In den Figuren wird ein Befestigungselement 25 gezeigt, welches eine Breite aufweist, die kleiner als die Länge des Umkehrabschnittes 11 ist. Alternativ wäre es denkbar, Befestigungselemente 25 derart auszubilden, dass diese sich über mehrere Umkehrabschnitte 11 erstrecken, so dass mit einem einzigen Befestigungselement mehrere Umkehrabschnitte 11 gelagert werden. Besonders bevorzugt kann das Befestigungselement 25 eine Länge aufweisen, welche im wesentlichen derjenigen des Absorberbleches 1 entlang der Kante, an welcher das Versteifungselement 4 angeordnet ist, entspricht.

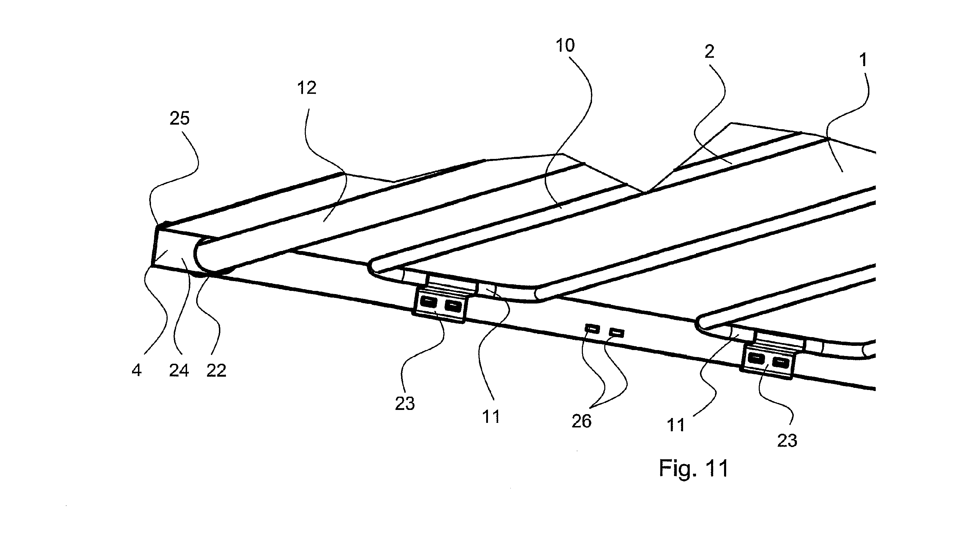

In der Figur 11 wird ein Ausschnitt aus der Figur 10 gezeigt. In der Figur kann gut erkannt werden, dass das Absorberblech 2 in Kontakt mit der Oberfläche des kurzen Profilschenkel 25, welcher zum Aufnahmeraum gerichtet ist, steht. Das Befestigungselement 23 ist dabei derart angeordnet, dass es die Absorberleitung 2 im Bereich des Umkehrabschnittes 11 umgibt. Somit wird die Verbindung zwischen Versteifungselement 4 und Absorbereinheit 1, 2 durch das Befestigungselement 23 und das Versteifungselement 4 selbst bereitgestellt.

In den Figuren 12 und 13 wird das Befestigungselement 23 im Detail gezeigt. Das Befestigungselement 23 umfasst im wesentlichen einen Befestigungsabschnitt 27 und einen Klemmabschnitt 28.

Mit dem Befestigungsabschnitt 27 wird das Befestigungselement an das Versteifungselement 4 befestigt. Hierfür weist der Befestigungsabschnitt 27 zwei über einen Verbindungsabschnitt 36 miteinander verbundene Befestigungslaschen 29 und 30 auf. Die beiden Befestigungslaschen 29 und 30 umschliessen einen Zwischenraum 31, durch welchen das Versteifungselement 4 aufgenommen wird. Weiter umfasst eine der beiden Befestigungslaschen 29 Widerhaken 32, welche in die Öffnungen 26 im Versteifungselement 4 eingreifen, so dass ein formschlüssiger Verbund zwischen Versteifungselement 4 und Befestigungselement 23 bereitgestellt wird. Die Widerhaken 32 ragen in den Zwischenraum 31 ein. Hier ist ein Beispiel mit zwei Widerhaken 32 gezeigt. Alternativ wäre es auch möglich, dass nur einer oder mehr als zwei Widerhaken 32 vorgesehen sind. Vorteilhaft entspricht die Zahl der Widerhaken 32 der Zahl der Durchbrüche 26. Den Widerhaken 32 gegenüberliegend sind in der anderen Befestigungslasche 30 Öffnungen 33 angeordnet. Die Öffnungen 33 dienen im wesentlichen als Demontagehilfe.

Dem Befestigungsabschnitt 27 schliesst sich der Klemmabschnitt 28 an, welcher hier im wesentlichen einen ersten Abschnitt 34 und einen zweiten Abschnitt 35, der winklig zum ersten Abschnitt 34 steht, umfasst. Der Klemmabschnitt 28 kommt im mit dem Versteifungselement 4 verbundenem Zustand mit dem Unkehrabschnitt 11 der Absorberleitung 2 in Verbindung.

Eine alternative Ausführungsform könnte auch ohne die Widerhaken 32 ausgebildet sein, wobei dann der Verbindungsabschnitt 36 als Federabschnitt ausgebildet ist, so dass die beiden Befestigungslaschen 29 gegeneinander gepresst werden und das Versteifungselement 4 klemmen, somit kann auch ein kraftschlüssiger Verbund geschaffen werden.

Alternativ ist es zudem denkbar, die Befestigungselemente 28 stoffschlüssig, also beispielsweise mittels einer Punktschweissung mit dem Versteifungselement 4 zu verbinden.

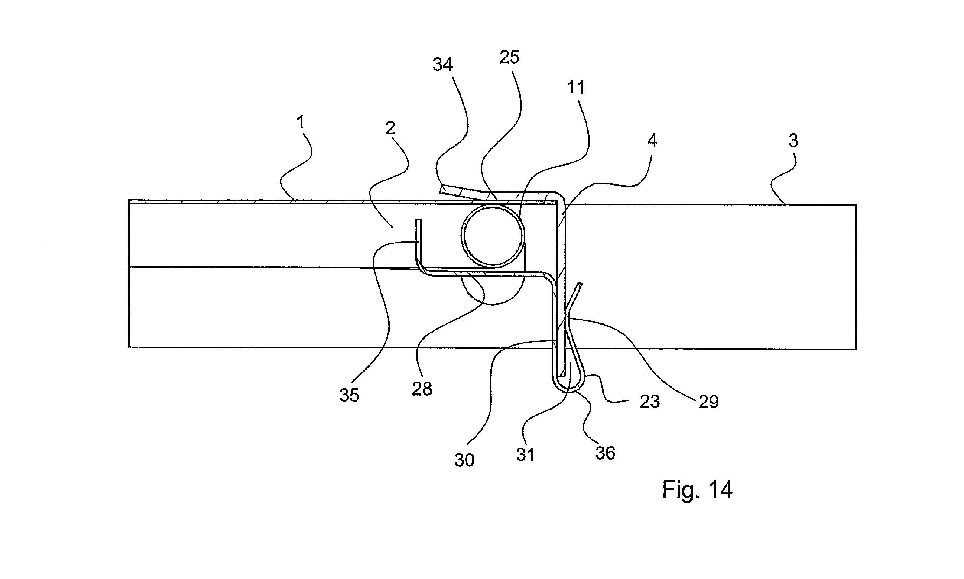

In der Figur 14 wird eine Schnittdarstellung gezeigt. Hier kann gut erkannt werden, dass der Umkehrabschnitt 11 der Absorberleitung 2 vom Befestigungselement 23 am Versteigungselement 4 gehalten wird.

Wie in der Figur 14 gezeigt, kann der kurze Profilschenkel 25 im vorderen Bereich mit einer Abbiegung 34 versehen sein. Ein derartige Ausgestaltung ist vorteilhaft, da dann die Oberfläche des Absorberbleches nicht durch das Versteifungselement verletzt wird.

### BEZUGSZEICHENLISTE

- 1: Absorberblech
- 2: Absorberleitung
- 3: Sammelleitung
- 4: Versteifungselement
- 5: Aussenrahmen
- 6: Innenraum
- 7: Eintrittsabschnitt
- 8: Austrittsabschnitt
- 9: Anfangsabschnitt
- 10: gerade verlaufender Abschnitt
- 11: Umkehrabschnitt
- 12: Sammelleitung
- 13: Hauptsteg
- 14: Profilabschnitt
- 15: Zwischenraum
- 16: Öffnungen
- 17: Zwischenraum
- 18: Durchbruch

- 19: Haltestege
- 20: Öffnung im Aussenrahmen
- 21: Lagerelement
- 22: freies Ende
- 23: Befestigungselement
- 24: Profilschenkel
- 25: Profilschenkel
- 26: Durchbrüche
- 27: Befestigungsabschnitt
- 28: Klemmabschnitt
- 29: Befestigungslaschen
- 30: Befestigungslaschen
- 31: Zwischenraum
- 32: Widerhaken
- 33: Öffnungen
- 34: Abbiegung

## Patentansprüche

1. Sonnenkollektor mit einem einen Innenraum (6) begrenzenden Aussenrahmen (5) und einer im Innenraum (6) angeordneten Absorbereinheit, welche mindestens eine Absorberleitung (2), ein mit der Absorberleitung (2) in Verbindung stehendes Absorberblech (1), und Sammelleitungen (3, 12), die mit der Absorberleitung (2) in Verbindung stehen, umfasst, **dadurch gekennzeichnet, dass** mindestens ein sich entlang einer Längsachse erstreckendes Versteifungselement (4) angeordnet ist, in welches Teile der Absorbereinheit (1, 2) einragen und/oder hindurchragen, wobei das Versteifungselement (4) die Absorbereinheit (4) versteift.

2. Sonnenkollektor nach Anspruch 1, **dadurch gekennzeichnet, dass** die Sammelleitung (3) durch das Versteifungselement (4) hindurchragt.

3. Sonnenkollektor nach einem der vorhergehenden Ansprüche, **dadurch gekennzeichnet, dass** das Versteifungselement (4) ein sich entlang einer Längsachse erstreckendes Profil, insbesondere ein U-Profil, ein Flachprofil, ein L-profil oder ein T-Profil, ist.

4. Sonnenkollektor nach einem der vorhergehenden Ansprüche, **dadurch gekennzeichnet, dass** Teile der Absorberleitungen (2) in einen durch das Profil bereitgestellten Zwischenraum (15) einragen, oder dass Teile der Absorberleitung (2) durch im Profil angebrachte Durchbrüche (18) hindurchragen.

5. Sonnenkollektor nach einem der vorhergehenden Ansprüche, **dadurch gekennzeichnet, dass** die Versteifungselemente (4) an zwei sich gegenüberliegenden Kanten des Absorberbleches (1) angeordnet sind.

6. Sonnenkollektor nach einem der vorhergehenden Ansprüche, **dadurch gekennzeichnet, dass** in dem Bereich, in welchem das Versteifungselement (4) zu liegen kommt, zwischen den Absorberleitungen (2) und dem Absorberblech (1) ein Zwischenraum (15) vorgesehen ist, in welchen Teile des Versteifungselementes (4) einragen können.

7. Sonnenkollektor nach Anspruch 6, **dadurch gekennzeichnet, dass** das Versteifungselement (4) Haltestege (19) umfasst, welche für die Absorberleitung (2, 11) einen Anschlag bereitstellen, so dass eine Relativbewegung zwischen Versteifungselement (4) und Absorbereinheit begrenzbar ist.

8. Sonnenkollektor nach einem der Ansprüche 6 oder 7, **dadurch gekennzeichnet, dass** die Absorberleitungen (2) mäanderförmig oder schlangenförmig angeordnet sind, wobei jeweils der Umkehrabschnitt (11) der in das Versteifungselement (4) einragende und/oder hindurchragende Teil ist, wobei der Zwischenraum (15) zwischen Absorberleitung (2) und Absorberblech (3) im Bereich des Umkehrabschnittes (11) angeordnet ist.

9. Sonnenkollektor nach einem der Anspruch 6 bis 8, **dadurch gekennzeichnet, dass** die Materialien der Absorberleitung (2), des Absorberblech (3) und des Versteifungselement (4) einen im wesentlichen ähnlichen Ausdehnungskoeffizienten aufweisen.

10. Sonnenkollektor nach einem der Ansprüche 1 bis 5, **dadurch gekennzeichnet, dass** sowohl Teile des Absorberbleches (1) und der Absorberleitung (2) in das Versteifungselement (4) einragen, und dass das Absorberblech (1) und Absorberleitung (2) über mindestens ein Klemmelement (25) oder eine Vielzahl von Klemmelementen (25) mit dem Versteifungselement (4) verbunden werden.

11. Sonnenkollektor nach Anspruch 10, **dadurch gekennzeichnet, dass** die Absorberleitungen (2) mäanderformig oder schlangenförmig angeordnet sind, wobei das Klemmelement (23) im Bereich der Umkehrabschnitte (11) angeordnet ist und/oder dass das Klemmelement (23) kraftschlüssig, stoffschlüssig und/oder formschlüssig mit dem Versteifungselement (4) verbunden wird.

12. Sonnenkollektor nach einem der vorhergehenden Ansprüche, **dadurch gekennzeichnet, dass** die Sammelleitungen (3, 12) derart angeordnet sind, dass sich diese aus dem Innenraum (6) durch den Aussenrahmen (5) nach aussen erstrecken, so dass die Sammelleitungen (3, 12) freie Enden (22) bereitstellen, wobei der Sonnenkollektor über diese freien Enden (22) gelagert wird.

13. Sonnenkollektor nach einem der vorhergehenden Ansprüche, **dadurch gekennzeichnet, dass** die Sammelleitungen (3, 12) durch den Aussenrahmen (5) hindurch ragen und derart mit dem Aussenrahmen (5) in Verbindung stehen, dass die Absorbereinheit (1, 2) über die Sammelleitungen (3, 12) im Aussenrahmen (5) gelagert wird, wobei sich die Sammelleitungen (3, 12) an zwei sich gegenüberliegenden Seiten des Aussenrahmens (5) nach aussen erstrecken.

14. Sonnenkollektor nach Anspruch 12 oder 13, **dadurch gekennzeichnet, dass** die Sammelleitungen (3, 12) über ein Dichtelement (21) mit dem Aussenrahmen (5) in Verbindung stehen.

15. Verfahren zur Herstellung eines Sonnenkollektors nach einem der vorhergehenden Ansprüche, **dadurch gekennzeichnet, dass** in einem ersten Schritt die Absorbereinheit bereitgestellt wird, dass die Absorbereinheit anschliessend mit den Versteifungselementen (4) in Verbindung gebracht wird und zusammen mit dem Versteifungselementen (4) in den Innenraum (6) des Aussenrahmens (5) eingesetzt wird.
